# FASCICULE DE BREVET EUROPEEN

(11) **EP 1 927 774 B1**
(45) Date de publication et mention de la délivrance du brevet: **29.05.2013**
(21) Numéro de dépôt: 07291298.3
(22) Date de dépôt: 26.10.2007
(51) Int. Cl.: F16D 1/10, F01D 5/02

(54) **Dispositif de liaison de deux arbres rotatifs, en particulier dans une turbomachine**
Verbindungsvorrichtung zwischen zwei Drehwellen, insbesondere einer Strömungsmaschine
Device for connecting two rotating shafts, in particular in a turbomachine

(30) Priorité: 28.11.2006 FR 0610381
(43) Date de publication de la demande: 04.06.2008
(73) Titulaire: SNECMA, 75015 Paris (FR)
(72) Inventeur: Lescure, Xavier Firmin Camille Jean, 92100 Boulogne-Billancourt (FR); Pham, Lucien Paul, 77350 Le Mee Sur Seine (FR)
(74) Mandataire: Ramey, Daniel

(56) Documents cités:
- US-A- 3 602 535
- US-A- 4 292 001
- US-A- 5 282 358
- US-A- 5 580 183
- US-A- 6 142 033

## Description

La présente invention concerne un dispositif de liaison de deux arbres rotatifs, en particulier dans une turbomachine entre un arbre de turbine et un arbre de compresseur de la turbomachine.

Un dispositif de liaison selon le préambule de la revendication 1 est connu de US-A-3 602 535.

Dans une turbomachine telle qu'un turboréacteur ou un turbopropulseur d'avion, l'arbre de la turbine basse-pression entraîne en rotation l'arbre du compresseur basse-pression, ces deux arbres étant reliés en rotation par un système de cannelures rectilignes qui sont formées par exemple sur la surface cylindrique extérieure de l'arbre de turbine et qui sont engagées dans des cannelures rectilignes complémentaires d'une surface cylindrique intérieure de l'arbre du compresseur.

En fonctionnement, les cannelures des deux arbres sont déformées élastiquement en torsion et on constate que les contraintes sont maximales aux extrémités longitudinales des cannelures de l'arbre mâle, qui est l'arbre de turbine, cette concentration de contraintes limitant la durée de service de cet arbre.

L'invention a notamment pour but d'apporter une solution simple, efficace et économique à ce problème.

Elle propose à cet effet un dispositif de liaison de deux arbres rotatifs tel que défini dans la revendication 1.

Dans ce dispositif de liaison, la plus grande souplesse en torsion de la partie de l'arbre mené voisine d'une extrémité des cannelures de l'arbre menant, permet de diminuer les contraintes maximales appliquées à cette extrémité en fonctionnement, cette diminution pouvant être de l'ordre de 30%, et d'augmenter de façon notable la durée de vie de l'arbre menant.

Selon une autre caractéristique de l'invention, la ou chaque partie cylindrique plus souple en torsion de l'arbre mené (et/ou celle correspondante de l'arbre menant) est dépourvue de cannelures.

L'arbre mené (et/ou l'arbre menant) comporte ainsi deux parties cannelées séparées longitudinalement l'une de l'autre par une partie plus souple en torsion, ce qui permet de réduire les contraintes appliquées sur les cannelures d'une partie cannelée d'extrémité de cet arbre, en augmentant les contraintes appliquées aux extrémités des cannelures de l'autre partie cannelée de cet arbre.

En d'autres termes, lorsque les arbres menant et mené comportent chacun deux parties cannelées séparées longitudinalement, les contraintes maximales sont réparties sur les extrémités des parties cannelées et sont moins importantes que dans le cas où les arbres comportent une seule partie cannelée.

Dans un mode de réalisation de l'invention, la zone cannelée de l'arbre mené comprend au moins deux parties cylindriques présentant une plus grande souplesse en torsion, ces deux parties cylindriques étant séparées l'une de l'autre.

Lorsque les arbres comprennent chacun trois parties cannelées séparées longitudinalement, les contraintes maximales appliquées aux cannelures en fonctionnement sont réparties sur les extrémités des trois parties cannelées et sont encore moins importantes.

En variante, la ou chaque partie cylindrique plus souple en torsion de l'arbre mené et/ou celle correspondante de l'arbre menant sont usinées pour supprimer tout contact entre elles à la transmission d'un couple de rotation.

La souplesse en torsion de l'arbre mené peut être augmentée, dans la ou chaque partie cylindrique précitée, par réduction de son épaisseur et/ou de son diamètre, et/ou par usinage, par exemple par perçage.

La longueur de la ou de chaque partie cylindrique plus souple est d'environ 15 à 30% de la longueur totale de la partie de l'arbre mené comportant les cannelures.

L'invention concerne également une turbomachine, telle qu'un turboréacteur ou un turbopropulseur d'avion, comprenant un compresseur dont l'arbre est entraîné en rotation par un arbre de turbine, caractérisée en ce que l'arbre du compresseur et l'arbre de turbine sont reliés par un dispositif tel que décrit ci-dessus.

Les parties cylindriques plus souples précitées des arbres mené et menant peuvent être au voisinage des extrémités aval et amont des zones cannelées des arbres.

L'invention sera mieux comprise et d'autres caractéristiques, détails et avantages de l'invention apparaîtront à la lecture de la description suivante faite à titre d'exemple non limitatif en référence aux dessins annexés dans lesquels :
- la figure 1 est une demi vue schématique en coupe axiale d'un dispositif de liaison selon la technique antérieure, entre un arbre de turbine et un arbre de compresseur d'une turbomachine ;
- la figure 2 est une demi vue schématique en coupe axiale d'un dispositif de liaison selon l'invention, entre un arbre de turbine et un arbre de compresseur d'une turbomachine ;
- la figure 3 est une vue schématique en coupe axiale de l'arbre de compresseur de la figure 2, à plus grande échelle ;
- la figure 4 est une vue schématique correspondant à la figure 3 et illustrant une variante de réalisation de l'invention.

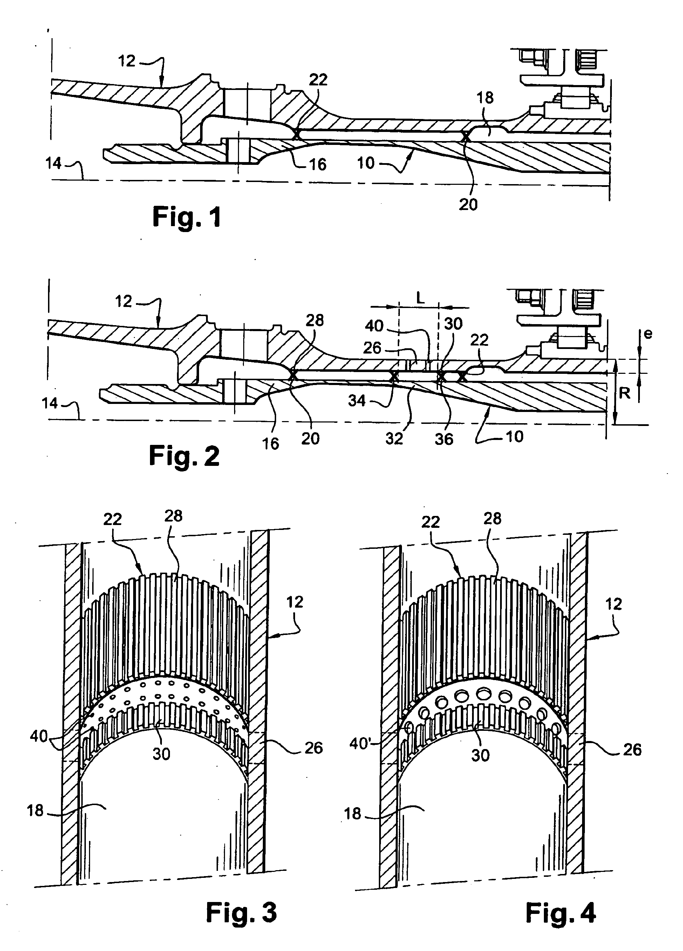

La figure 1 représente très schématiquement un arbre 10 d'une turbine basse-pression et un arbre 12 d'un compresseur basse-pression d'une turbomachine telle qu'un turboréacteur ou un turbopropulseur d'avion, l'arbre de turbine 10 entraînant l'arbre 12 du compresseur autour de l'axe longitudinal 14 de la turbomachine à l'aide d'un dispositif de liaison par cannelures selon la technique antérieure.

L'extrémité amont 16 de l'arbre de turbine 10 forme une partie cylindrique mâle qui est engagée dans un passage cylindrique femelle 18 de l'arbre 12 du compresseur, et qui comporte sur une surface cylindrique extérieure une pluralité de cannelures rectilignes 20 à section sensiblement rectangulaire ou trapézoïdale, qui sont régulièrement réparties autour de l'axe 14 et qui coopèrent avec des cannelures rectilignes 22 correspondantes d'une surface cylindrique intérieure du passage 18 de l'arbre 12.

L'arbre de turbine 10 est entraîné en rotation autour de l'axe 14 grâce à l'énergie apportée par les gaz chauds sortant de la chambre de combustion de la turbomachine, et qui entraînent les roues de la turbine basse-pression fixées à l'extrémité aval de l'arbre de turbine 10. Cet arbre 10 transmet à son tour par l'intermédiaire des cannelures 20, 22 un couple de rotation à l'arbre 12 du compresseur qui porte à son extrémité amont la soufflante de la turbomachine.

Lors de la transmission d'un couple de rotation, les cannelures 20, 22 des arbres 10, 12 sont déformées élastiquement en torsion autour de l'axe 14, ce qui génère des contraintes importantes aux extrémités longitudinales des cannelures 20 de l'arbre de turbine 10, en particulier à leurs extrémités longitudinales aval, et se traduit par une diminution de la durée de service de cet arbre 10.

L'invention permet de remédier à ce problème grâce au calibrage de la souplesse en torsion d'au moins une partie de la zone cannelée de l'arbre 12 du compresseur, cette partie étant située au voisinage de l'extrémité aval de la zone cannelée de l'arbre 10.

Dans l'exemple représenté en figures 2 et 3, les zones cannelées des deux arbres ont sensiblement la même longueur et la zone cannelée de l'arbre 12 du compresseur comprend une partie cylindrique 26 dépourvue de cannelures qui est située à proximité de l'extrémité aval de la zone cannelée de l'arbre 12, et qui a une plus grande souplesse en torsion que le reste de cette zone cannelée. De cette manière, la partie d'extrémité aval de la zone cannelée de l'arbre 12 résiste moins aux efforts de torsion appliqués par la zone cannelée de l'arbre 10, ce qui limite les contraintes générées dans la partie d'extrémité aval des cannelures de l'arbre 10, augmentant ainsi la durée de service de cet arbre.

La partie cylindrique 26 de l'arbre 12 (délimitée par des traits en pointillés) est située entre deux parties cannelées indépendantes, une partie cannelée amont 28 et une partie cannelée aval 30.

La partie 32 de l'arbre de turbine, alignée radialement avec la partie 26 de l'arbre 12, est également dépourvue de cannelures 22 et se trouve entre deux parties cannelées indépendantes, une partie cannelée amont 34 et une partie cannelée aval 36.

La souplesse en torsion de la partie 26 de l'arbre 12 a pour effet de répartir les contraintes en fonctionnement sur les extrémités longitudinales amont et aval des deux parties cannelées 34 et 36 de l'arbre 10. Les contraintes maximales subies par les cannelures sont ainsi moins importantes que dans le cas où les arbres comportent une seule partie cannelée.

La souplesse en torsion de la partie 26 de l'arbre 12 est calibrée en faisant varier son épaisseur e, son rayon extérieur R et/ou sa dimension axiale L. Plus l'épaisseur e ou le rayon R de cette partie 26 sont faibles et plus sa souplesse en torsion est importante. La souplesse en torsion de l'arbre peut également être augmentée par usinage de la partie cylindrique 26 de l'arbre 12.

Dans l'exemple représenté en figure 3, la partie 26 de l'arbre 12 comporte deux rangées annulaires de perçages radiaux 40, qui sont régulièrement répartis autour de l'axe 14 de la turbomachine. On a représenté en figure 4, une variante de réalisation de l'invention dans laquelle la partie 26 de l'arbre 12 comporte une seule rangée annulaire de perçages radiaux 40', ces perçages 40' ayant un diamètre supérieur à celui des perçages 40 de la figure 3. Le nombre, la disposition et les dimensions de ces perçages 40, 40' sont déterminés de manière à calibrer avec précision la souplesse de cette partie 26.

La partie cylindrique 26 de l'arbre a ici une longueur d'environ 30mm, et les parties cannelées amont et aval ont respectivement des longueurs de 100mm et 10mm environ.

Dans encore une autre variante non représentée, la partie 26 de plus grande souplesse de l'arbre 12 et la partie cylindrique 32 correspondante de l'arbre 10, comprennent des cannelures, au moins certaines de ces cannelures étant usinées pour supprimer tout contact entre elles à la transmission d'un couple de rotation. Ce couple de rotation est transmis uniquement par l'intermédiaire des cannelures 20, 22 situées de part et d'autre des parties cylindriques 26 et 32. Les cannelures 20, 22 des arbres peuvent être à section carrée, rectangulaire, ou trapézoïdale.

La zone cannelée de l'arbre 12 du compresseur peut comporter deux parties cylindriques 26 de plus grande souplesse, voire plus, ces parties étant séparées les unes des autres et pouvant être prévues au voisinage de l'extrémité amont et aval de la zone cannelée de l'arbre 12.

## Revendications

1. Dispositif de liaison de deux arbres rotatifs (10, 12), l'un menant et l'autre mené, une extrémité de l'arbre menant (10) comportant des cannelures rectilignes (20) et étant engagée dans une partie femelle de l'arbre mené (12) comportant des cannelures rectilignes (22) complémentaires de celles de l'arbre menant, **caractérisé en ce que** la zone cannelée de l'arbre mené (12) comprend au moins une partie cylindrique (26) de plus grande souplesse en torsion au voisinage d'une de ses extrémités longitudinales, cette partie cylindrique séparant longitudinalement deux parties cannelées de la zone cannelée et étant dépourvue de cannelures ou comportant des cannelures qui sont usinées pour supprimer tout contact avec les cannelures de l'arbre menant à la transmission d'un couple de rotation, la longueur de la ou de chaque partie cylindrique étant d'environ 15 à 30% de la longueur totale de la zone cannelée.

2. Dispositif selon la revendication 1, **caractérisé en ce que** la zone cannelée de l'arbre mené (12) comprend au moins deux parties cylindriques (26) présentant une plus grande souplesse en torsion, ces deux parties cylindriques étant séparées l'une de l'autre.

3. Dispositif selon la revendication 1 ou 2, **caractérisé en ce que** l'arbre menant (10), dans sa ou ses parties cylindriques (32) correspondant à celles plus souples de l'arbre mené (12), est dépourvu de cannelures.

4. Dispositif selon l'une des revendications précédentes, **caractérisé en ce que** la souplesse en torsion de l'arbre mené (12) est augmentée, dans la ou chaque partie cylindrique précitée, par réduction de son épaisseur (e) et/ou de son rayon (R).

5. Dispositif selon l'une des revendications précédentes, **caractérisée en ce que** la souplesse en torsion de l'arbre mené (12) est augmentée, dans la ou chaque partie cylindrique précitée, par usinage, par exemple par perçage.

6. Turbomachine, telle qu'un turboréacteur ou un turbopropulseur d'avion, comprenant un compresseur dont l'arbre (12) est entraîné en rotation par un arbre de turbine (10), **caractérisée en ce que** l'arbre du compresseur et l'arbre de turbine sont reliés par un dispositif selon l'une des revendications précédentes.

7. Turbomachine selon la revendication 6, **caractérisée en ce que** les parties cylindriques plus souples des arbres mené et menant sont au voisinage des extrémités aval des zones cannelées des arbres.

8. Turbomachine selon la revendication 6, **caractérisée en ce que** les parties cylindriques plus souples des arbres mené et menant sont au voisinage des extrémités amont des zones cannelées des arbres.

## Patentansprüche

1. Vorrichtung zur Verbindung zwischen zwei drehbaren Wellen (10, 12), nämlich einer Antriebswelle und einer Abtriebswelle, wobei ein Ende der Antriebswelle (10) geradlinige Riffel (20) aufweist und in ein Aufnahmeteil der Abtriebswelle (12) eingreift, die geradlinige Riffel (22) aufweist, welche komplementär zu denen der Antriebswelle ausgeführt sind, **dadurch gekennzeichnet, dass** der geriffelte Bereich der Abtriebswelle (12) zumindest einen zylindrischen Abschnitt (26) aufweist, der im Bereich eines seiner Längsenden torsionselastischer ist, wobei dieser zylindrische Abschnitt zwei geriffelte Abschnitte des geriffelten Bereichs longitudinal trennt und frei von Riffeln ist oder aber Riffel aufweist, die so bearbeitet sind, dass sie jeglichen Kontakt mit den Riffeln der Antriebswelle bei der Übertragung eines Drehmoments unterbinden, wobei die Länge des bzw. jeden zylindrischen Abschnitts etwa 15 bis 30 % der Gesamtlänge des geriffelten Bereichs beträgt.

2. Vorrichtung nach Anspruch 1, **dadurch gekennzeichnet, dass** der geriffelte Bereich der Abtriebswelle (12) zumindest zwei zylindrische Abschnitte (26) aufweist, die torsionselastischer ausgebildet sind, wobei diese beiden zylindrischen Abschnitte voneinander getrennt sind.

3. Vorrichtung nach Anspruch 1 oder 2, **dadurch gekennzeichnet, dass** die Antriebswelle (10) in ihrem bzw. ihren zylindrischen Abschnitt(en) (32), der bzw. die den elastischeren Abschnitten der Abtriebswelle (12) entspricht bzw. entsprechen, frei von Riffeln ist.

4. Vorrichtung nach einem der vorangehenden Ansprüche, **dadurch gekennzeichnet, dass** die Torsionselastizität der Abtriebswelle (12) in dem bzw. jedem genannten zylindrischen Abschnitt durch Verminderung ihrer Dicke (e) und/oder ihres Radius (R) erhöht wird.

5. Vorrichtung nach einem der vorangehenden Ansprüche, **dadurch gekennzeichnet, dass** die Torsionselastizität der Abtriebswelle (12) in dem bzw. jedem genannten zylindrischen Abschnitt durch spanende Bearbeitung, beispielsweise durch Bohrung, erhöht wird.

6. Turbomaschine bzw. Turbinentriebwerk, wie etwa Turbostrahltriebwerk oder Turbopropellertriebwerk für Flugzeuge, enthaltend einen Verdichter, dessen Welle (12) von einer Turbinenwelle (10) drehend angetrieben wird, **dadurch gekennzeichnet, dass** die Welle des Verdichters und die Turbinenwelle über eine Vorrichtung nach einem der vorangehenden Ansprüche verbunden sind.

7. Turbomaschine nach Anspruch 6, **dadurch gekennzeichnet, dass** die zylindrischen Abschnitte der Abtriebs- und Antriebswelle mit höherer Elastizität benachbart zu den stromabwärtigen Enden der geriffelten Bereiche der Wellen liegen.

8. Turbomaschine nach Anspruch 6, **dadurch gekennzeichnet, dass** die zylindrischen Abschnitte der Abtriebs- und Antriebswelle mit höherer Elastizität benachbart zu den stromaufwärtigen Enden der geriffelten Bereiche der Wellen liegen.

## Claims

1. A device for connecting two rotating shafts (10, 12), one driving and the other driven, one end of the driving shaft (10) having rectilinear splines (20) and being engaged in a female portion of the driven shaft (12) having rectilinear splines (22) complementing those of the driving shaft, wherein the splined region of the driven shaft (12) comprises at least one cylindrical portion (26) which has a greater torsional flexibility and is situated in the vicinity of a longitudinal end of the splined region, this cylindrical portion longitudinally separating two splined portions of the splined region and being devoid of splines or comprising splines that are machined in order to eliminate any contact with the splines of the driving shaft upon the transmission of a torque, the length of the or of each cylindrical portion being approximately 15 to 30% of the total length of the splined region.

2. The device as claimed in claim 1, wherein the splined region of the driven shaft (12) comprises at least two cylindrical portions (26) having a greater torsional flexibility, these two cylindrical portions being separated from one another.

3. The device as claimed in claim 1 or 2, wherein the driving shaft (10), in its cylindrical portion or portions (32) corresponding to the more flexible portions of the driven shaft (12), is devoid of splines.

4. The device as claimed in one of the preceding claims, wherein the torsional flexibility of the driven shaft (12) is increased, in the or each aforementioned cylindrical portion, by reducing its thickness (e) and/or its radius (R).

5. The device as claimed in one of the preceding claims, wherein the torsional flexibility of the driven shaft (12) is increased, in the or each aforementioned cylindrical portion, by machining, for example by drilling.

6. A turbomachine, such as an aircraft turbofan or turboprop, comprising a compressor whose shaft (12) is driven rotationally by a turbine shaft (10), wherein the shaft of the compressor and the turbine shaft are connected by a device as claimed in one of the preceding claims.

7. The turbomachine as claimed in claim 6, wherein the more flexible cylindrical portions of the driven and driving shafts are in the vicinity of the downstream ends of the splined regions of the shafts.

8. The turbomachine as claimed in claim 6, wherein the more flexible cylindrical portions of the driven and driving shafts are in the vicinity of the upstream ends of the splined regions of the shafts.
